# DEMANDE DE BREVET EUROPEEN

(11) **EP 1 603 049 A1**
(43) Date de publication de la demande: **07.12.2005**
(21) Numéro de dépôt: 05291170.8
(22) Date de dépôt: 31.05.2005
(51) Int. Cl.: G06F 13/38

(54) **Interfacage de modules fonctionnels dans un systeme sur une puce**

(30) Priorité: 03.06.2004 FR 0406011
(71) Demandeur: STMicroelectronics S.A., 92120 Montrouge (FR)
(72) Inventeur: Chalopin Hervé, Av, Marcel Pagnol, 13400 Aubagne (FR); Tabaries Laurent, 1340 Aubagne (FR)
(74) Mandataire: Verdure, Stéphane

(57) **Abrégé**

Un système électronique (10) comprend un module initiateur (21) et au moins un module cible (23) adressable par le module initiateur, et un module d'interface et de commande (20) pour assurer l'interfaçage entre des protocoles de communication respectifs du module initiateur et du module cible. Le module d'interface et de commande est construit pour positionner un signal (DET) de détection d'instruction composite en réponse à la détection d'une instruction composite exécutée par le module initiateur, lequel signal de détection d'instruction composite est utilisé pour l'interfaçage. Le module d'interface et de commande est construit pour détecter une instruction composite exécutée par le module initiateur lorsque, à un cycle d'horloge déterminé du module initiateur, il est détecté un changement de l'opération élémentaire exécutée par le module initiateur par rapport au cycle d'horloge précédent du module initiateur, alors que, dans le même temps, un signal de sélection du module cible (CS_11) qui était actif est maintenu actif.

## Description

La présente invention se rapporte de manière générale au domaine des systèmes électroniques en circuit intégré, appelés "systèmes sur une puce" ou SoC (de l'anglais "System On a Chip").

Plus particulièrement, l'invention concerne l'interfaçage entre des modules fonctionnels d'un tel système qui respectent les spécifications de protocoles de communication respectifs distincts.

Un module fonctionnel d'un système sur une puce est parfois appelé composant virtuel ou bloc de "propriété intellectuelle", ou encore bloc IP (de l'anglais "Intellectual Property") dans le jargon de l'Homme du métier. Il est conçu pour assurer une fonction déterminée, ou est à usage général (il s'agit éventuellement d'un microprocesseur ou d'un microcontrôleur). Il peut être réalisé sous la forme d'éléments matériels et/ou d'éléments logiciels.

On distingue les modules de type maître (ci-après modules initiateurs), qui prennent l'initiative d'échanger des données avec un ou plusieurs autres modules, et les modules de type esclave (ci-après modules cibles), dont le rôle est de répondre aux requêtes reçues du module initiateur qui a la main. En cas de pluralité de modules initiateurs, une unité d'arbitrage (ou arbitre) est chargée d'arbitrer des requêtes conflictuelles d'accès à une ressource commune provenant de modules initiateurs distincts, pour accorder un droit exclusif d'accès à la ressource, à l'un déterminé desdits modules initiateurs.

Classiquement, les modules fonctionnels communiquent via au moins un bus de communication comprenant un bus de données, un bus d'adresses et un bus de contrôle en respectant les spécifications d'un protocole de communication déterminé. Selon certains protocoles, le traitement d'une requête peut commencer par la mise en oeuvre d'une procédure d'établissement de liaison à acquittements mutuels ("handshake" en anglais). Par procédure d'établissement de liaison, on entend une procédure au cours de laquelle le module initiateur et le module cible échangent des signaux de contrôle, jusqu'à ce qu'ils soient prêts pour la transmission mutuelle de données.

Lorsque des modules fonctionnels sont conçus pour respecter les spécifications de protocoles de communication respectifs distincts, on prévoit des moyens d'interfaçage et/ou de commande, pour leur permettre de communiquer entre eux.

Il existe des modules fonctionnels de type initiateur, en particulier des microcontrôleurs et/ou des microprocesseurs, qui possèdent un jeu d'instructions comprenant des instructions composites. Par instruction composite, on entend une instruction qui correspond à plus d'une opération élémentaire. En principe, la durée d'exécution d'une instruction composite prend de ce fait plus d'un cycle d'horloge du module initiateur.

Par exemple, le jeu d'instructions du microcontrôleur ST7 de STMicroelectronics possède une instruction BSET et une instruction BRST, dont l'exécution prend trois cycles de son signal d'activation (signal d'horloge du ST7) et qui correspondent chacune à plusieurs opérations élémentaires pour un même code opération (ou "OP Code", de l'anglais "OPeration Code"). En particulier, elles implémentent deux requêtes d'accès au module cible, dont une requête en lecture et une requête en écriture. En fait, elles correspondent au total à trois opérations élémentaires ou opérations de niveau atomique, c'est-à-dire de plus bas niveau protocolaire, qui est le niveau d'une opération du microcode correspondant à une requête.

L'interfaçage d'un module initiateur ayant ainsi un jeu d'instructions comprenant au moins une instruction composite avec un module cible déterminé, qui est effectué lorsque les deux modules fonctionnels respectent des protocoles de communication différents, peut alors poser des problèmes spécifiques.

En particulier, si le module cible prévoit l'exécution d'un "handshake" avant de traiter chaque requête, on doit prévoir qu'un module d'interface et de commande, qui réalise l'interface entre le module initiateur et le module cible, mette en oeuvre un traitement particulier lors de l'exécution d'une instruction composite. En effet, étant donné que, du point de vue du module cible, il y a plusieurs requêtes d'accès successives et distinctes (deux dans l'exemple des instructions composites BSET et BRST du microcontrôleur ST7), il est nécessaire d'effectuer un "handshake" pour l'exécution de chacune desdites requêtes, bien qu'elles correspondent au traitement d'une seule et unique instruction.

En outre lorsqu'un mécanisme d'arbitrage est prévu pour arbitrer des requêtes conflictuelles provenant de plusieurs modules initiateurs distincts, il peut être nécessaire de prévoir des mesures pour éviter qu'un autre module initiateur puisse obtenir le droit d'accès pendant l'exécution des requêtes successives correspondant à une même instruction exécutée par un module initiateur déterminé.

Or, certains au moins des modules initiateurs connus, et en particulier le microcontrôleur ST7 précité, ne délivrent pas à l'extérieur d'information indiquant directement si l'instruction en cours d'exécution est ou non une instruction composite. Une telle information peut être rendue disponible à l'intérieur du module initiateur, notamment au niveau du décodage d'instruction, mais elle n'est pas accessible de l'extérieur et n'est donc pas exploitable pour l'interfaçage.

Il s'ensuit que l'interfaçage d'un tel module fonctionnel avec d'autres modules fonctionnels respectant les spécifications d'un protocole de communication différent pose un problème de nature protocolaire, qui dépasse le cadre classique de la mise en forme de signaux au niveau électrique.

L'invention vise à résoudre les problèmes de l'art antérieur précités, en permettant de produire une information indiquant si une instruction en cours d'exécution par un module initiateur est ou non une instruction composite, à partir des seules informations classiquement délivrées en sortie par le module initiateur. C'est une information binaire, qui peut prendre la forme d'un signal de détection à deux niveaux logiques. Elle peut être exploitée par un module d'interfaçage.

Ainsi, un premier aspect de l'invention propose un système électronique comprenant un module initiateur respectant les spécifications d'un premier protocole de communication, et au moins un module cible adressable par le module initiateur et respectant les spécifications d'un second protocole de communication, différent dudit premier protocole de communication, ainsi en outre qu'un module d'interface et de commande, qui est par exemple disposé entre le module initiateur et le module cible, pour assurer l'interfaçage entre le premier protocole de communication et le second protocole de communication. Le module d'interface et de commande est couplé à un bus de communication utilisé par le module initiateur pour communiquer avec l'extérieur.

Le module d'interface et de commande est construit pour positionner (de préférence de façon matérielle, pour la rapidité) un signal de détection d'instruction composite (qui peut être purement interne audit module d'interface et de commande, ou être accessible de l'extérieur dudit module) en réponse à la détection d'une instruction composite exécutée par le module initiateur. Ce signal de détection d'instruction composite peut être utilisé pour l'interfaçage. Le module d'interface et de commande est aussi construit pour détecter une instruction composite exécutée par le module initiateur en surveillant à chaque cycle d'horloge déterminé du module initiateur, l'évolution d'informations non dédiées qui sont collectées sur le bus de communication, par rapport au cycle précédent du module initiateur. Les informations non dédiées qui sont collectées à un cycle d'horloge déterminé du module initiateur comprennent d'une part des informations identifiant l'opération élémentaire en cours d'exécution par le module initiateur à ce cycle d'horloge, et d'autre part la valeur logique courante d'un signal de sélection du module cible. Une instruction composite est détectée lorsque, à un cycle d'horloge déterminé du module initiateur, il est détecté un changement de l'opération élémentaire exécutée par le module initiateur par rapport au cycle d'horloge précédent du module initiateur, alors que, dans le même temps, le signal de sélection du module cible qui était actif est maintenu actif.

Dans un mode de réalisation, le module d'interface et de commande comprend une mémoire pour stocker à chaque cycle du signal d'horloge du module initiateur les informations identifiant l'opération élémentaire en cours d'exécution et la valeur courante du signal de sélection du module cible.

Par exemple, les informations stockées dans la mémoire sont écrasées à chaque cycle d'horloge du module initiateur par les informations correspondantes qui sont collectées sur le bus de communication, après comparaison avec lesdites informations correspondantes.

Dans un mode de réalisation, le système peut comprendre en outre un décodeur d'adresse pour générer le signal de sélection du module cible. En variante, des moyens de décodage d'adresse sont prévus dans le module d'interface et de commande, pour générer le signal de sélection de module cible.

Dans un mode de réalisation, les informations identifiant l'opération élémentaire en cours d'exécution par le module initiateur comprennent la valeur instantanée d'un signal de lecture/écriture (signal R/W) délivré sur le bus de communication par le module initiateur.

En variante ou en complément, les informations identifiant l'opération élémentaire en cours d'exécution par le module initiateur peuvent aussi comprendre la valeur instantanée de signaux d'adresse délivrés sur le bus de communication par le module initiateur.

Certaines instructions composites comprennent une opération élémentaire de lecture et une opération élémentaire d'écriture à la même adresse du module cible, comme c'est le cas des instructions BSET et BRST précitées du microcontrôleur ST7. Une telle instruction composite peut avantageusement être détectée lorsque, à un cycle d'horloge déterminé du module initiateur, la valeur du signal de lecture/écriture change par rapport au cycle d'horloge précédent du module initiateur, alors que, dans le même temps, les signaux d'adresse restent constants et que le signal de sélection du module cible qui était actif est maintenu actif.

Un second aspect de l'invention propose une clé de stockage comprenant au moins une mémoire non volatile et un circuit de commande, caractérisée en ce que le circuit de commande est un circuit sur une puce (SoC) formant un système selon le premier aspect ci-dessus.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma synoptique d'un exemple de clé de mémoire selon le second aspect de l'invention;
- la figure 2 est un schéma synoptique d'un exemple de système électronique selon le premier aspect de l'invention, qui peut être compris dans la clé de mémoire de la figure 1;
- la figure 3 est un schéma illustrant le couplage d'un module fonctionnel à un bus de communication;
- la figure 4 est un schéma synoptique d'un exemple de module d'interface et de commande utilisable dans un système selon la figure 2; et,
- la figure 5 montre des chronogrammes illustrant un exemple de fonctionnement du module d'interface et de commande selon la figure 4.

L'invention est décrite ci-après dans un exemple d'application à un circuit de commande destiné à gérer une clé de stockage ou clé de mémoire.

Une clé de mémoire forme un medium de stockage de masse de petites dimensions, monté dans un support amovible prenant la forme d'une clé ou d'un porte-clés. Ce medium permet de stocker et de transporter facilement une certaine quantité de données, dans le but, par exemple, de les transférer d'un ordinateur à un autre. Une telle clé de mémoire s'insère en principe dans les ports USB ("Universal Serial Bus") des ordinateurs. C'est pourquoi on l'appelle aussi clé de stockage USB, clé de mémoire USB ou tout simplement clé USB.

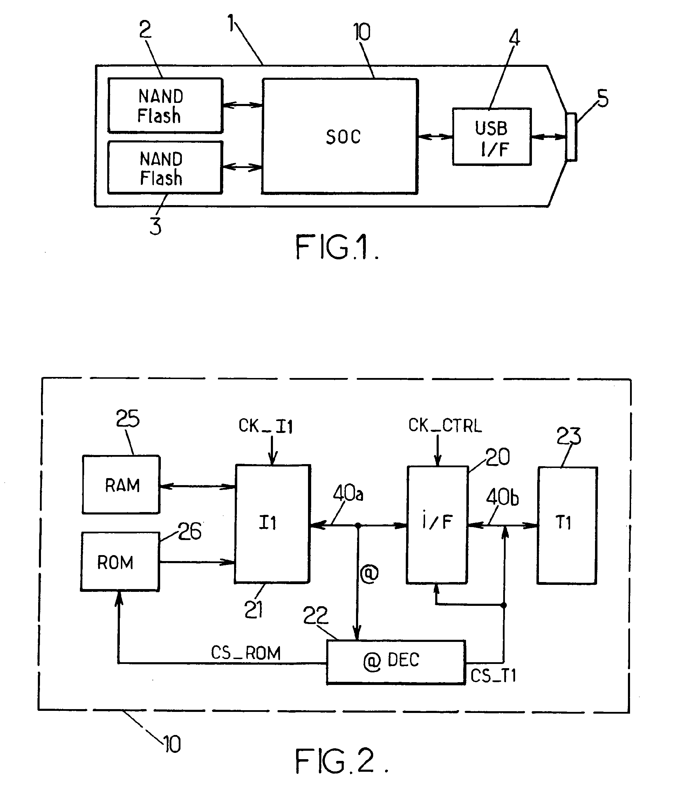

A la figure 1, une telle clé de mémoire 1 comprend un circuit de commande 10, couplé à un connecteur 5 de type USB, via un circuit 4 d'interface USB. Par ailleurs, le circuit 10 est couplé à une ou plusieurs mémoires 2,3 non volatiles et de grande capacité, qui sont par exemple des mémoires de type NAND-Flash ou similaire. Le circuit 10 est télé-alimenté lorsque la clé de mémoire 1 est connectée via le connecteur 5 à un ordinateur (non représenté) ou similaire. Le circuit d'interface 4 peut par exemple assurer la compatibilité avec la norme USB 2.0 (norme pour l'échange de données entre les ordinateurs à usage général et leurs périphériques).

Le circuit de commande peut avantageusement être un système sur une puce (SoC), afin de satisfaire un haut degré d'intégration requis par la miniaturisation souhaitée de ce genre de produits électroniques.

La figure 2 illustre un exemple d'architecture d'un tel système.

Dans cet exemple, le système 10 comprend un coeur 21, qui est par exemple un microcontrôleur tel que le ST7 de STMicroelectronics. Ce coeur 21 est conçu en tant que module fonctionnel de type initiateur (I1). Pour sa communication avec d'autres modules fonctionnels, il respecte les spécifications d'un protocole de communication déterminé, par exemple un protocole propriétaire, ci-après le protocole du bus du ST7.

D'autres modules initiateurs (non représentés), notamment un autre coeur tel qu'un coprocesseur dédié aux opérations de commande des moyens de stockage de masse formés par les mémoires internes 2 et 3, peuvent aussi être prévus. De tels autres modules peuvent par exemple respecter les spécifications du standard VCI ("Virtual Component Interface") de la VSIA ("Virtual Socket Interface Alliance"), Wakefield, Massachusetts, Etats-Unis.

Une mémoire volatile (RAM - "Random Access Memory") 25, est utilisée par le module 21 pour stocker des informations temporaires, liées à l'application concernée.

De plus, une mémoire non volatile (ROM - "Read Only Memory") 26 stocke des données permanentes, notamment le code de l'application qui est chargé et exécuté dans le module 21. La mémoire 26 est parfois appelée mémoire de programme. Le microcontrôleur 21 est adapté pour extraire ("fetch" en anglais) de la mémoire de programme les instructions à exécuter, et pour les présenter en entrée de son décodeur d'instruction.

Le système 10 comprend aussi un contrôleur de périphérique 23, en particulier un contrôleur de fonction USB 2.0, tel que le composant virtuel MUSBHSFC Inventra™ de Mentor Graphics, en tant que module fonctionnel de type cible (T1). Ce composant virtuel supporte le standard VCI précité.

Dans un exemple, le module 23 comprend plusieurs registres de données (non représentés), qui peuvent être des registres classiques ou des registres indexés. Le module cible 23 est adressable par les modules initiateurs tel que le module 21, via une valeur d'adresse déterminée. Par exemple, pour accéder à l'un des registres du module 23, le module initiateur 21 génère une requête d'accès comportant en paramètre l'adresse correspondante d'un registre du module 23.

Bien entendu, le système peut comprendre d'autres modules cibles (non représentés) tels que le module 23.

Dans l'exemple représenté à la figure 2, un module 20 d'interface et de commande (I/F) est disposé entre les modules 21 et 23 auxquels il est couplé par des bus de communication respectivement 40a et 40b. Le bus 40a est par exemple le bus de communication du microcontrôleur ST7, dont le protocole de communication ne prévoit pas de "handshake". Le bus 40b est par exemple un bus VCI OCB ("VCI On Chip Bus") dont le protocole de communication, conforme aux spécifications du standard VCI, prévoit un "handshake".

Le module 20 comprend une unité de commande (non représentée) pour assurer l'interface entre les protocoles respectifs du bus 40a et du bus 40b.

Le module 21 est activé par les fronts d'un signal d'horloge CK_I1. Le module 20 est activé par les fronts d'un signal d'horloge CK_CTRL. Les signaux CK_I1 et CK_CTRL sont par exemple délivrés par un générateur d'horloge (non représenté). Ici, on considère par exemple que les fronts d'activation de tous les signaux d'horloge sont les fronts montants.

Lorsque le module initiateur 21 est un microcontrôleur ST7, la fréquence du signal d'horloge CK_I1 est par exemple égale à 15 ou 30 MHz, selon le mode de fonctionnement courant du microcontrôleur. La fréquence du signal d'horloge CK_CTRL est par exemple deux fois plus grande que la fréquence maximum du signal CK_I1. Dans l'exemple précité, la fréquence du signal CK_CTRL peut ainsi être égale à 60 MHz ou plus. Toutefois, cette propriété n'est pas nécessaire à la mise en oeuvre de l'invention.

Dans l'exemple représenté, le système comprend en outre un décodeur d'adresse 22. Ce décodeur d'adresse (@DEC) est couplé au bus 40a, pour décoder les signaux d'adresse déposés par le module initiateur 21 sur le bus d'adresses du bus 40a en tant que paramètres d'une requête d'accès.

Le décodeur d'adresse 22 délivre un signal de sélection de module cible CS_T1, associé au module cible 23, lorsque la requête d'accès concerne un registre de données dudit module 23. De même, il délivre un signal CS_ROM de sélection de la mémoire de programme 26 lorsque le module initiateur y accède pour extraire la prochaine instruction à exécuter. Dans un exemple considéré ici, les signaux CS_T1 et CS_ROM sont des signaux binaires actifs au niveau logique 1, correspondant à un niveau électrique haut.

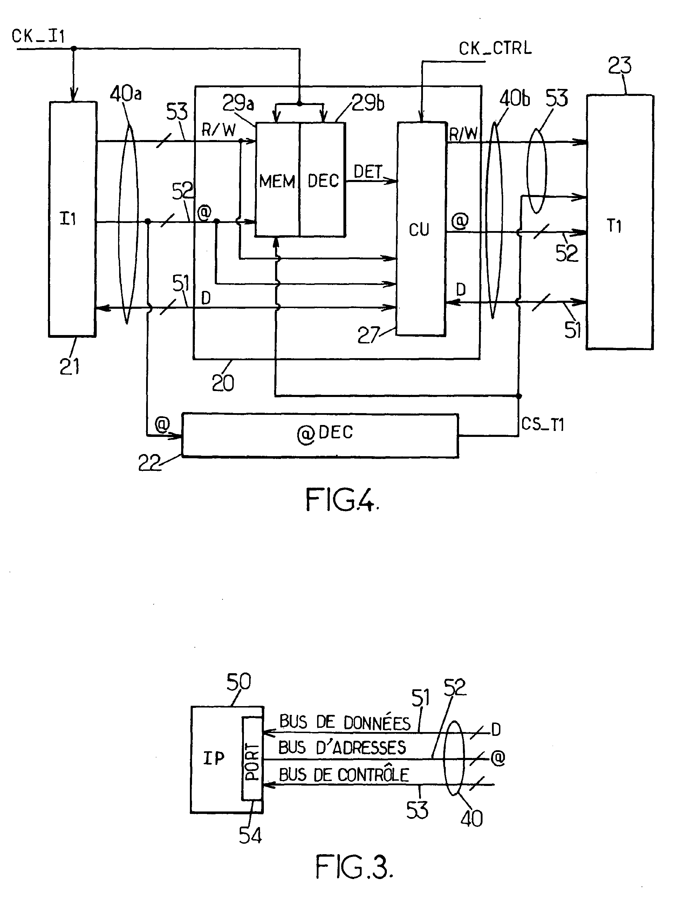

Le schéma de la figure 3 illustre la connexion d'un module fonctionnel 50 quelconque à un bus de communication 40 qui comprend des canaux pour la communication d'informations entre ce module et un autre module du système.

Le bus de communication 40 peut ainsi comprendre, dans un exemple, un bus de données 51, un bus d'adresses 52 et un bus de contrôle 53. Dans certains cas, le bus de données 51 comprend un sous-bus de données pour la lecture de données, et un sous-bus de données pour l'écriture de données. Le module fonctionnel 50 comprend un port de communication 54, qui peut être de type maître ou de type esclave selon que le module 50 est de type initiateur ou de type cible, respectivement. Le port 54 permet la liaison du module 50 au bus de communication 40.

Le bus de données 51 est utilisé pour transmettre les signaux de données (D), qui contiennent les informations échangées entre les modules du système.

Le bus d'adresses 52 est utilisé pour transmettre les valeurs d'adresses (@), qui identifient le registre d'un module cible dans lequel les données transmises sur le bus de données doivent être lues ou écrites, ainsi éventuellement que leur emplacement à l'intérieur du module concerné.

Enfin, le bus de contrôle 53 est utilisé pour transmettre les signaux de commande. De tels signaux servent notamment aux modules initiateurs pour faire des requêtes d'accès à des registres dans les modules cibles. Ils servent aussi aux modules cibles pour indiquer la fin d'une transaction, et éventuellement la réussite ou l'échec de la transaction. D'autres signaux de commande servent aussi à définir le sens de la transaction (signal de lecture/écriture, communément noté signal R/W), synchroniser les échanges, etc.

On va maintenant décrire un premier mode de réalisation du module d'interface et de commande 20, en référence au schéma de la figure 4. La connexion du module 20 au module initiateur 21, au décodeur d'adresse 22, et au module cible 23 est également représentée sur cette figure.

Lorsque le module initiateur 21 exécute une instruction déterminée, il initie une ou plusieurs requêtes d'accès au module cible 23. Les paramètres d'une telle requête sont déposés sur le bus 40a, pour être fournis en entrée du module d'interface et de commande 20. Ces paramètres comprennent des informations de commande, des informations d'adresse et des informations de donnée, sous la forme de signaux logiques transmis sur les lignes du bus 40a. Des signaux correspondants sont délivrés par le module 20 au module cible 23 via le bus 40b, en respectant les spécifications du protocole dudit bus (tant du point de vue purement protocolaire qu'au point de vue de la mise en forme des signaux au niveau électrique).

Les informations de commande comprennent un signal de commande R/W qui est un signal de lecture/écriture. Un tel signal est délivré par le module initiateur 21 au module d'interface et de commande 20 via le bus de contrôle 53 du bus 40a. Il est par exemple positionné à l'état logique 1 lorsque le module initiateur 21 a besoin d'accéder en écriture au module cible 23, et à l'état logique 0 lorsque le module initiateur 21 a besoin d'accéder en lecture au module cible 23. On notera qu'un signal de même nature est produit par le module d'interface et de commande 20 et est délivré au module cible 23 via le bus de contrôle 53 du bus 40b, en respectant les spécifications du protocole dudit bus.

Les informations de commande peuvent aussi comprendre d'autres signaux de commande, dont certains ont été introduits plus haut, et sur lesquels il n'est pas utile de s'étendre ici.

Les informations d'adresse comprennent une adresse @, qui identifie le registre de données du module cible 23 qui est concerné par la requête d'accès. Cette adresse est codée sur un nombre déterminé de bits, par exemple 8, 16 ou encore 32 bits. Elle est transmise via les bus d'adresses 52 du bus 40a et du bus 40b, sous la commande du module d'interface et de commande 20.

Plus particulièrement, le module d'interface et de commande 20 est couplé au bus d'adresses 52 du bus 40a pour recevoir l'adresse @, et au bus d'adresses 52 du bus 40b pour transmettre l'adresse @ au module 23, après une mise en forme pour respecter les spécifications du protocole du bus 40b.

De façon connue en soi, le décodeur d'adresse 22 est également couplé au bus d'adresses 52 du bus 40a pour recevoir l'adresse @, et il génère le signal de sélection de module cible CS_T1 associé au module cible 23 lorsque cette adresse est celle d'un registre du module 23. Le signal CS_T1 est un signal de commande indiquant au module cible 23 que la requête d'accès concerne l'un de ses registres. Il est donc transmis par le décodeur d'adresse 22 au module 23 via le bus de contrôle 53 du bus 40b. A cet effet, le décodeur d'adresse est aussi couplé au bus de contrôle 53 du bus 40b.

Enfin, les informations de donnée se rapportent à la valeur D à écrire (pour une requête d'accès en écriture) ou à la valeur lue (pour une requête d'accès en lecture) dans le registre cible 23. Dans le premier cas, ces informations sont transmises du module 21 au module 23. Dans le second cas, elles sont transmises du module 23 au module 21. Dans les deux cas, elles sont transmises via le bus de données 51 du bus 40a et du bus 40b, sous la commande du module d'interface et de commande 20.

Plus particulièrement, le module d'interface et de commande 20 est couplé au bus de données 51 du bus 40a et au bus de données 51 du bus 40b pour transmettre la valeur D, après une mise en forme pour respecter les spécifications du protocole du bus destinataire. La valeur D est codée sur un nombre déterminé de bits, par exemple 8 ou 16 bits.

Afin d'assurer sa fonction d'interface entre les protocoles respectifs du bus 40a et du bus 40b, le module 20 comprend une unité de commande 27 qui est couplée au bus de données 51, au bus d'adresses 52 et au bus de contrôle 53 du bus 40a et du bus 40b, pour recevoir et/ou délivrer les informations citées ci-dessus. L'unité 27 est activée par les fronts du signal d'horloge CK_CLK.

Le module d'interface et de commande 20 est construit pour positionner un signal de détection DET en réponse à l'exécution par le module initiateur 21 d'une instruction composite, en se basant sur des informations collectées sur le bus 40a, et plus particulièrement sur le bus de contrôle 53 et sur le bus d'adresses 52 du bus 40a, durant l'exécution de cette instruction.

Dans un mode de réalisation, le signal DET est un signal interne au module 20, qui est fourni en entrée de l'unité de commande 27, afin qu'elle effectue un traitement d'interfaçage approprié lorsque l'instruction en cours d'exécution par le module initiateur 21 est une instruction composite. Ce traitement peut inclure, par exemple, la mise en oeuvre d'un "handshake" à chaque requête d'accès au module cible 23, pour se conformer aux spécifications du standard VCI qui est supporté par le module cible 23. La description détaillée de ce traitement sortirait du cadre de la présente description. En effet, l'invention permet de manière générale de détecter de l'extérieur du module initiateur 21, que l'instruction en cours d'exécution dans ce module initiateur est une instruction composite, et ne concerne pas la manière dont cette information doit être utilisée étant donné que cela dépend des contraintes liées à l'application.

Dans un mode de réalisation, on détecte que l'instruction en cours d'exécution dans le module initiateur est une instruction composite en surveillant l'évolution dans le temps des informations qui sont collectées sur le bus 40a. Plus particulièrement, on compare des informations identifiant l'opération en cours de traitement à un cycle déterminé du signal d'horloge CK_I1 du module initiateur 21 avec des informations identifiant l'opération qui a été traitée au cycle précédent de ce signal d'horloge. Si ces informations ont varié sans que le signal CS_T1 de sélection du module cible ne change d'état logique, c'est qu'on est confronté à une opération élémentaire différente sans qu'il s'agisse d'une instruction distincte. C'est donc que le module initiateur 21 est en train d'exécuter une instruction composite. En effet, s'il s'agissait d'une nouvelle opération élémentaire correspondant à une nouvelle instruction, le signal CS_T1 aurait été à l'état inactif au cycle d'horloge précédent pendant l'extraction ("fetching", en anglais) de ladite nouvelle instruction à partir de la mémoire de programme 26 (figure 2), puis serait repassé à l'état actif au cycle d'horloge courant.

A cet effet, le module d'interface et de commande 20 comprend aussi une mémoire 29a qui est agencée pour stocker, à chaque cycle du signal d'horloge CK_I1, des informations identifiant l'opération en cours de traitement. Ces informations comprennent par exemple la nature (lecture ou écriture) de l'opération, qui est déterminée par la valeur logique 0 ou 1 du signal R/W de lecture/écriture, et en outre l'adresse @ du registre concerné par cette opération. En outre, on stocke aussi dans la mémoire 29a la valeur logique du signal CS_T1 de sélection du module cible.

Ainsi, la mémoire 29a est couplée au bus de commande 53 et au bus d'adresses 52 du bus 40a, pour recevoir en entrée le signal R/W et l'adresse @, respectivement. De plus, le signal CS_T1 est également délivré en entrée de la mémoire 29a. Enfin, la mémoire 29a est mise à jour au rythme du signal d'horloge CK_I1 du module initiateur 21 afin de stocker les valeurs courantes du signal R/W, de l'adresse @ et du signal CS_T1 à chaque cycle du signal CK_I1.

On notera que, lorsque les informations de commande constituant des paramètres de la requête comprennent d'autres signaux de commande que le signal R/W envisagé ici, on peut aussi les stocker dans la mémoire 29a, pour servir également à la génération du signal DET.

Une unité 29b de décodage (DEC) est couplée à la mémoire 29a, et est cadencée par le signal d'horloge CK_I1. L'unité 29b assure, de façon matérielle (c'est-à-dire pas par logiciel), la comparaison à chaque cycle du signal CK_I1 entre les valeurs courantes du signal R/W, de l'adresse @ et du signal CS_T1 et leurs valeurs au cycle précédent du signal CK_I1 telles que stockées dans la mémoire 29a (avant sa mise à jour).

L'unité de décodage 29b positionne (c'est-à-dire met à l'état logique 1) un signal de détection DET, en réponse à la détection d'une instruction composite exécutée par le module initiateur 21. Ce signal DET est fourni à l'unité de commande 27 qui l'utilise pour l'interfaçage, par exemple pour commander un "handshake" avant de générer une requête d'accès au module cible 23.

Dans un mode de réalisation, les informations stockées dans la mémoire 29a sont écrasées à chaque cycle du signal d'horloge CK_I1 par les informations correspondantes qui sont collectées sur le bus 40a, après comparaison avec lesdites informations correspondantes.

Une instruction composite exécutée par le module initiateur est en effet détectée en surveillant à chaque cycle d'horloge déterminé du module initiateur, l'évolution d'informations non dédiées qui sont collectées sur le bus de communication, par rapport au cycle précédent du module initiateur. Par informations non dédiées, on exclut toute information qui serait délivrée par le module initiateur 21 pour indiquer directement que l'instruction en cours d'exécution est une instruction composite (une telle information n'étant pas délivrée par la plupart des composants virtuels existants, dont le microcontrôleur ST7).

Les informations non dédiées qui sont collectées à un cycle d'horloge déterminé du module initiateur comprennent d'une part des informations identifiant l'opération élémentaire en cours d'exécution par le module initiateur 21 à ce cycle d'horloge, et d'autre part la valeur logique courante du signal CS_I1 de sélection du module cible.

Par exemple, une instruction composite est détectée lorsque, à un cycle d'horloge déterminé du module initiateur, il est détecté un changement de l'opération élémentaire exécutée par le module initiateur par rapport au cycle d'horloge précédent du module initiateur, alors que, dans le même temps, le signal de sélection du module cible, qui était actif, est maintenu actif.

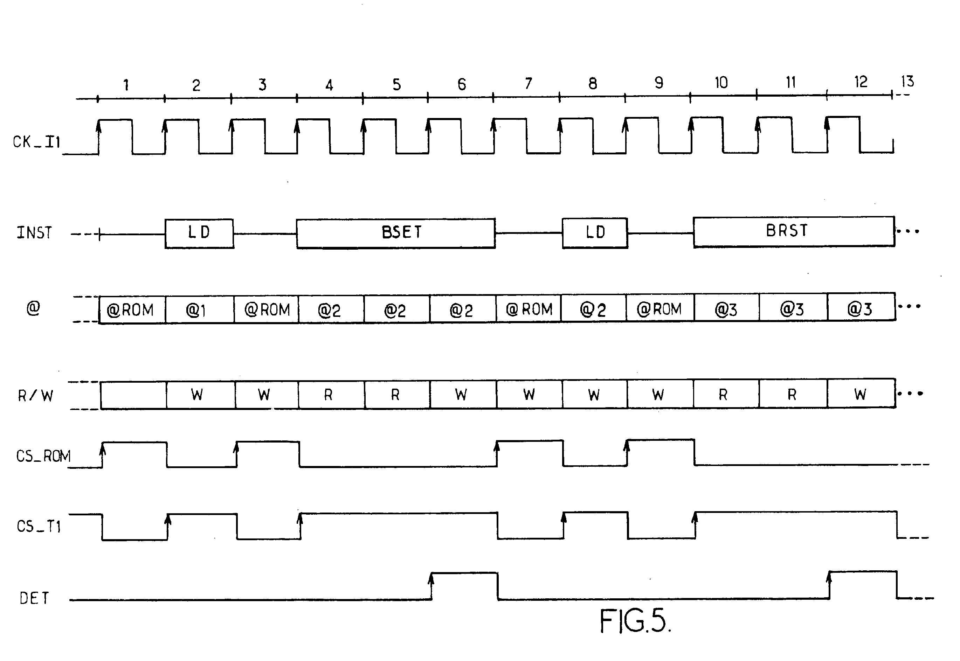

Les chronogrammes de la figure 5 illustrent un exemple de fonctionnement du module d'interface et de commande 20 selon la présente invention. Sur ces chronogrammes, les fronts actifs (ici les fronts montants) des signaux sont identifiés par une flèche (verticale).

Dans l'exemple représenté, on considère que le module initiateur est un microcontrôleur ST7, dont le code (programme) comprend successivement les instructions LD ("Load"), BSET ("Set Bit"), LD, et BRST ("Reset Bit").

La première courbe de la figure 5 montre le signal d'horloge CK_I1 dont les fronts montants activent le module initiateur 21, la mémoire 29a et l'unité de décodage 29b. Pour faciliter les explications qui vont suivre, on a numéroté les cycles d'horloge du module initiateur en indiquant des numéros 1 à 13 au dessus des périodes du signal CK_I1.

La deuxième courbe indique, le cas échéant, l'instruction (INST) en cours d'exécution dans le module initiateur 21 à chaque cycle d'horloge. Dans l'exemple représenté, une instruction LD est ainsi exécutée au cycle d'horloge n° 2, et une autre au cycle d'horloge n° 8. De plus, l'instruction BSET est exécutée aux cycles d'horloge n° 4, 5 et 6, et l'instruction BRST est exécutée aux cycles d'horloge n° 10, 11 et 12. Ces instructions BSET et BRST sont des instructions composites, ainsi qu'il a été dit en introduction.

Toutes ces instructions concernent des registres du module cible 23, ayant une adresse respective. Dans l'exemple, la première instruction LD (celle exécutée au cycle d'horloge n° 2) est une opération de chargement d'un bit dans/depuis le registre ayant l'adresse notée @1. De même, la seconde instruction LD (celle exécutée au cycle d'horloge n° 8) est une opération de chargement d'un bit dans/depuis le registre ayant l'adresse notée @2. L'opération BSET est une opération de positionnement ("set") d'un bit dans le registre ayant l'adresse @2, et l'opération BRST est une opération de réinitialisation ("reset") d'un bit dans le registre ayant l'adresse @3.

La troisième courbe de la figure 5 indique, pour chaque cycle d'horloge, l'adresse présente sur le bus d'adresses 52 du bus 40a.

La sixième courbe montre le signal CS_T1 de sélection du module cible 23 en fonction du temps. Ce signal est actif à l'état logique 1. Il est généré par décodage de l'adresse présente sur le bus d'adresses 52 du bus 40a. Ainsi qu'on peut le voir, il est de ce fait actif dès que l'adresse présente sur ce bus est l'une des adresses @1, @2 ou @3 du module cible 23.

Avant l'exécution de chaque instruction, le module initiateur 21 accède à la mémoire de programme 26, pour en extraire le code de l'instruction et le placer en entrée de son décodeur d'instruction. Ces accès prennent chacun un cycle d'horloge. C'est pourquoi, pendant les cycles d'horloge n° 1, 3, 7 et 9, il n'y a pas d'instruction en cours d'exécution. Pendant ces cycles d'horloge, le module initiateur dépose l'adresse @ROM de la mémoire de programme 26 sur le bus d'adresses 52 du bus 40a, ainsi qu'on peut le voir sur la troisième courbe de la figure 5.

La cinquième courbe montre le signal CS_ROM de sélection de la mémoire de programme 26 en fonction du temps. Ce signal est actif à l'état logique 1. Il est généré par décodage de l'adresse présente sur le bus d'adresses 52 du bus 40a. Ainsi qu'on peut le voir, il est de ce fait actif dès que l'adresse présente sur ce bus est l'adresse @ROM de la mémoire de programme 26.

La quatrième courbe montre le signal de lecture/écriture R/W en fonction du temps. Ce signal est un signal binaire, prenant par exemple la valeur logique 0 pour une opération de lecture (R) et la valeur logique 1 pour une opération d'écriture (W). A la figure 5, on a toutefois préféré désigner la valeur logique du signal R/W par les lettres R et W, pour une meilleure lisibilité.

Enfin la septième courbe de la figure 5 montre le signal DET de détection d'instruction composite en fonction du temps. Ce signal est actif à la valeur logique 1.

Ainsi qu'on peut le voir une instruction composite est détectée, ce qui se traduit par le passage à la valeur logique 1 du signal DET, lorsque, à un cycle d'horloge déterminé du module initiateur, la valeur du signal R/W change par rapport au cycle d'horloge précédent, alors que, dans le même temps, l'adresse sur le bus d'adresse 52 du bus 40a reste constante et que le signal de sélection du module cible CS_T1 qui était actif est maintenu actif. Cela se produit ici aux cycles d'horloge n° 6 et 12.

En effet, au cycle d'horloge n° 4, on lit dans le module cible le mot mémoire stocké dans le registre ayant l'adresse @2 (le signal R/W étant sur R); puis au cycle d'horloge n° 5 le module initiateur produit un nouveau mot mémoire identique au mot mémoire lu à ceci près que l'un déterminé de ses bits est positionné (le signal R/W restant classiquement sur R pendant ce cycle d'horloge); et enfin, au cycle d'horloge n° 6, on écrit le nouveau mot mémoire dans le registre du module cible ayant l'adresse @2 (le signal R/W passant alors sur W). Pendant ces cycles d'horloge n° 4, 5 et 6, le signal CS_T1 est resté actif car il n'y a pas eu d'accès à la mémoire de programme 26 par le module initiateur 21, étant donné que les opérations exécutées sont des opérations élémentaires distinctes de la même instruction BSET. De plus, l'adresse @2 est restée présente sur le bus d'adresses 52 du bus 40a.

De la même manière, au cycle d'horloge n° 10, on lit dans le module cible le mot mémoire stocké dans le registre ayant l'adresse @3 (le signal R/W étant sur R); puis au cycle d'horloge n° 11 le module initiateur produit un nouveau mot mémoire identique au mot mémoire lu à ceci près que l'un déterminé de ses bits est réinitialisé (le signal R/W restant sur R pendant ce cycle d'horloge); et enfin, au cycle d'horloge n° 12, on écrit le nouveau mot mémoire dans le registre du module cible ayant l'adresse @3 (le signal R/W passant alors sur W). Pendant ces cycles d'horloge n° 10, 11 et 12, le signal CS_T1 est resté actif car il n'y a pas eu d'accès à la mémoire de programme 26 par le module initiateur 21, étant donné que les opérations exécutées sont des opérations élémentaires distinctes de la même instruction BRST. De plus, l'adresse @3 est restée présente sur le bus d'adresses 52 du bus 40a.

On notera que le signal DET de détection d'instruction composite est réinitialisé (c'est-à-dire ramené à l'état logique 0), en réponse à tout changement d'adresse, ou au changement de valeur du signal CS_T1. Ici, le signal DET est réinitialisé au début du cycle n° 7 et du cycle n° 13.

## Revendications

1. Système électronique comprenant un module initiateur (21) respectant les spécifications d'un premier protocole de communication, et au moins un module cible (23) adressable par le module initiateur et respectant les spécifications d'un second protocole de communication, différent dudit premier protocole de communication,
**caractérisé en ce qu'**il comprend en outre un module d'interface et de commande (20) pour assurer l'interfaçage entre le premier protocole de communication et le second protocole de communication;
**en ce que** le module d'interface et de commande est couplé à un bus de communication (40a) utilisé par le module initiateur pour communiquer avec l'extérieur;
**en ce que** le module d'interface et de commande est construit pour positionner un signal (DET) de détection d'instruction composite en réponse à la détection d'une instruction composite exécutée par le module initiateur, ledit signal de détection d'instruction composite étant utilisé pour l'interfaçage;
**en ce que** le module d'interface et de commande est construit pour détecter une instruction composite exécutée par le module initiateur en surveillant à chaque cycle d'horloge déterminé du module initiateur, l'évolution d'informations non dédiées qui sont collectées sur le bus de communication, par rapport au cycle précédent du module initiateur;
**en ce que** les informations non dédiées qui sont collectées à un cycle d'horloge déterminé du module initiateur comprennent d'une part des informations identifiant l'opération élémentaire en cours d'exécution par le module initiateur à ce cycle d'horloge, et d'autre part la valeur logique courante d'un signal (CS_I1) de sélection du module cible; et,
**en ce qu'**une instruction composite est détectée lorsque, à un cycle d'horloge déterminé du module initiateur, il est détecté un changement de l'opération élémentaire exécutée par le module initiateur par rapport au cycle d'horloge précédent du module initiateur, alors que, dans le même temps, le signal de sélection du module cible qui était actif est maintenu actif.

2. Système électronique selon la revendication 1, comprenant une mémoire (29a) pour stocker à chaque cycle du signal d'horloge du module initiateur les informations identifiant l'opération élémentaire en cours d'exécution et la valeur courante du signal de sélection du module cible.

3. Système électronique selon la revendication 2, dans lequel les informations stockées dans la mémoire sont écrasées à chaque cycle d'horloge du module initiateur par les informations correspondantes qui sont collectées sur le bus de communication, après comparaison avec lesdites informations correspondantes.

4. Système selon l'une quelconque des revendications précédentes, comprenant en outre un décodeur d'adresse (22) pour générer le signal de sélection du module cible.

5. Système selon l'une quelconque des revendications précédentes, dans lequel les informations identifiant l'opération élémentaire en cours d'exécution par le module initiateur comprennent la valeur instantanée d'un signal de lecture/écriture (R/W) délivré sur le bus de communication par le module initiateur.

6. Système électronique selon la revendication 5, dans lequel les informations identifiant l'opération élémentaire en cours d'exécution par le module initiateur comprennent en outre la valeur instantanée de signaux d'adresse délivrés sur le bus de communication par le module initiateur.

7. Système électronique selon la revendication 6, dans lequel, une instruction composite comprenant une opération élémentaire de lecture et une opération élémentaire d'écriture à la même adresse du module cible, une instruction composite est détectée lorsque, à un cycle d'horloge déterminé du module initiateur, la valeur du signal de lecture/écriture change par rapport au cycle d'horloge précédent du module initiateur, alors que, dans le même temps, les signaux d'adresse restent constants et que le signal de sélection du module cible qui était actif est maintenu actif.

8. Clé de stockage (1) comprenant au moins une mémoire non volatile (2,3) et un circuit de commande (10), **caractérisée en ce que** le circuit de commande est un circuit sur une puce formant système selon l'une quelconque des revendications précédentes.
